# EUROPEAN PATENT SPECIFICATION

(11) **EP 2 394 727 B1**
(45) Date of publication and mention of the grant of the patent: **21.08.2013**
(21) Application number: 11168782.8
(22) Date of filing: 06.06.2011
(51) Int. Cl.: B01D 46/00, G03B 21/16

(54) **Electronic device**
Elektronische Vorrichtung
Dispositif électronique

(30) Priority: 08.06.2010 JP 2010131289
(43) Date of publication of application: 14.12.2011
(73) Proprietor: Sanyo Electric Co., Ltd., Osaka 570-8677 (JP)
(72) Inventor: Kotani, Kazunori, Moriguchi-shi, Osaka 570-8677 (JP); Nakamura, Hisashi, Moriguchi-shi, Osaka 570-8677 (JP)
(74) Representative: Glawe, Delfs, Moll

(56) References cited:
- EP-A1- 1 813 180
- JP-A- 2005 221 581
- JP-A- 2007 059 593

## Description

### BACKGROUND OF THE INVENTION

The present invention relates to an electronic device, and more particularly, to an electronic device including an air filter device that automatically cleaning an air filter.

An electronic device, such as a personal computer or a video projector, draws in ambient air and uses the air to cool components. In particular, for a video projector, the air cools a light source lamp, which functions as a light source and becomes hot.

In such an electronic device, an air filter is used to capture dust that is suspended in the drawn in air. However, as time elapses, the air filter clogs as the captured dust accumulates. When the air filter clogs, the amount of air drawn through the air filter decreases. This adversely affects the effect for cooling components. To solve this problem, the air filter is manually cleaned. However, manual cleaning is troublesome. Accordingly, a device that automatically cleans an air filter has been developed.

Japanese Laid-Open Patent Publication No. 2008-170808 describes an example of a video projector that automatically cleans an air filter. Ambient air is drawn into a housing through an air inlet (inlet in Japanese Laid-Open Patent Publication No. 2008-170808) and sent through an air filter (intake filter in Japanese Laid-Open Patent Publication No. 2008-170808). After cooling components, the air is discharged from an exhaust port, which is arranged in a wall of the housing. The video projector includes a dust removing mechanism to automatically remove dust from the air filter and prevent clogging of the air filter.

After a predetermined time elapses from when projection of an image is completed and the light source lamp is deactivated, the video projector deactivates a cooling air circulation fan. In this state, when an off button is pushed on an operation unit, an automatic cleaning operation is performed on the air filter to automatically remove dust from the air filter. This prevents the air filter from being clogged.

In a facility that uses various machines including the video projector, the supply of power may not be cut independently for each machine. In such a case, the power supply for each machine may be collected at a single location. In the video projector, the automatic cleaning operation of the air filter is performed after the projection of an image ends. However, when the user forgets about the automatic cleaning operation performed on the air filter, for example, the power may be cut off before ending a completion sequence, which includes the automatic cleaning operation of the air filter. Further, the supply of power to the video projector may be cut off even before operation of the video projector is completed due to a handling error or the like. Thus, measures must be taken to perform scheduled automatic cleaning operation on the air filter even when power is cut off during operation. In the prior art, there are no electronic devices that ensures that such scheduled automatic cleaning operation of the air filter is performed.

### SUMMARY OF THE INVENTION

One aspect of the present invention is an electronic device including a housing. An air inlet is arranged in the housing to drawn in air. An air filter is coupled to the air inlet. A cleaner cleans the air filter. A control unit controls the cleaner. The control unit executes a cleaning operation sequence to automatically clean the air filter. When power supplied to the electronic device is cut off during the cleaning operation sequence and the electronic device restarts operation thereafter, the control unit controls the cleaner to complete the interrupted cleaning operation sequence.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:

Fig. 1 is a perspective view showing from below a video projector serving as an electronic device using a filter unit according to a first embodiment;

Fig. 2 is a block diagram of the video projector shown in Fig. 1;

Fig. 3 is a flowchart of a cleaning operation sequence for an air filter in the video projector of Fig. 1;

Fig. 4 is a flowchart of a cleaning operation sequence for an air filter in a video projector according to a second embodiment;

Fig. 5 is a flowchart of a cleaning operation sequence for an air filter in a video projector according to a third embodiment;

Fig. 6 is a flowchart of a first automatic cleaning operation sub-routine used in the third embodiment;

Fig. 7 is a flowchart of a cleaning operation sequence for an air filter in a video projector according to a fourth embodiment;

Fig. 8 is a flowchart of a second automatic cleaning operation sub-routine used in the fourth embodiment;

Fig. 9 is a timing chart of the cleaning operation sequence in the fourth embodiment;

Fig. 10 is a flowchart of a cleaning operation sequence of an air filter in a video projector according to a fifth embodiment;

Fig. 11 is a flowchart of a cleaning operation sequence of an air filter in a video projector according to a sixth embodiment; and

Fig. 12 is a timing chart of the cleaning operation sequence according to the sixth embodiment.

### DETAILED DESCRIPTION OF THE PREFERRED EMBODIMENTS

### First Embodiment

A video projector serving as an electronic device according to a first embodiment of the present invention will now be described with reference to the drawings. In the description hereafter, unless otherwise indicated, the upper, lower, left, right, front, and rear directions are as viewed in each drawing.

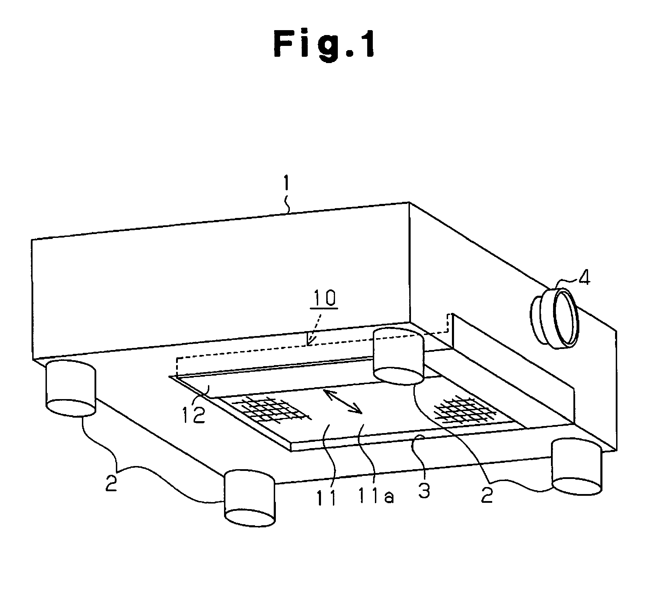

A video projector serving as an electronic device according to a first embodiment is a three-chip liquid crystal display projector and includes a box-shaped shell 1 as shown in the perspective view of Fig. 1. The shell 1 includes a bottom wall with four legs 2 arranged at the corners. Air used for cooling is drawn into the shell 1 from the bottom wall through an air inlet 3. An air filter device is arranged in the air inlet 3.

The air filter device is formed by a filter unit 10, which includes an air filter 11 and equipment for automatically cleaning the air filter 11. The filter unit 10 is coupled to and removed the shell 1 from a front side at which a projection lens 4 is arranged.

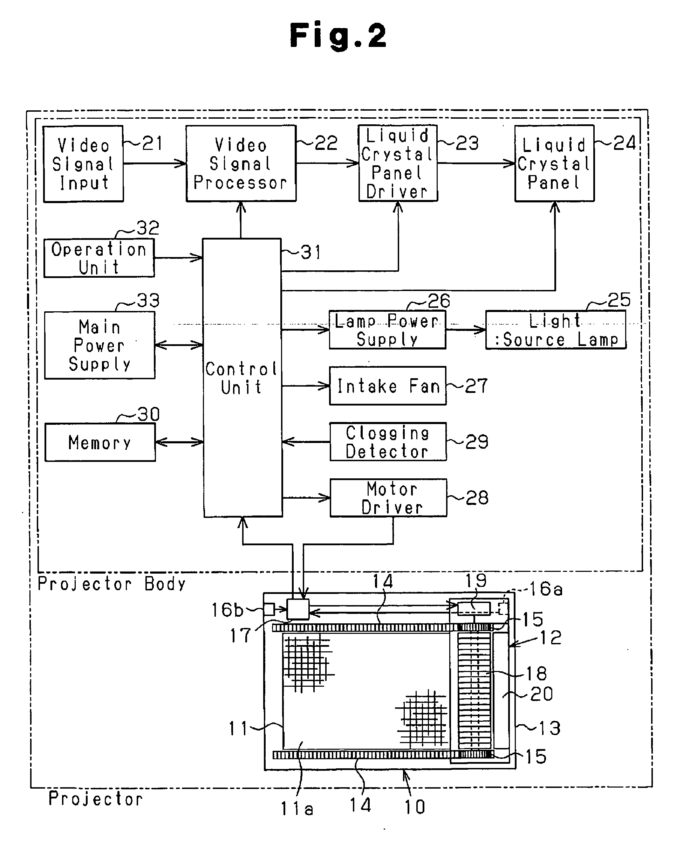

Referring to Fig. 2, the air filter 11 includes a housing 13. An automatic cleaner 12 is arranged on the housing 13. Racks 14 are arranged in front of and behind the air filter 11 on the housing 13. A pinion 15 is engaged with each rack 14. The filter unit 10 further includes a standby position sensor 16a, which detects movement of the automatic cleaner 12, a return position sensor 16b, and a substrate 17, which electrically connects the automatic cleaner 12 to a main body of the video projector.

As shown in Fig. 2, the automatic cleaner 12 includes a rotation brush 18, a motor 19, and a dust box 20. The rotation brush 18 removes dust from the air filter 11. The motor 19 drives the pinions 15 and the rotation brush 18. The dust box 20 collects the dust removed by the rotation brush 18.

The air filter 11 covers the air inlet 3 in the bottom wall of the shell 1. The air filter 11 includes a primary air filter 11a, which is exposed toward the downward area, and a secondary air filter (not shown), which is arranged inward from the primary air filter 11a, that is, at the downstream side of the primary air filter 11 a.

The automatic cleaner 12 removes dust from the air filter 11 while moving along the upstream side of the air filter 11. This restores the air intake capability of the air filter 11. The motor 19 drives the automatic cleaner 12. When the motor 19 is driven, the pinions 15 rotate in a state engaged with the racks 14 to move the automatic cleaner 12. The rotation brush 18 is rotated by a gear mechanism (not shown) when the automatic cleaner 12 moves. Accordingly, the rotation brush 18 moves on the air filter 11 as it rotates and thereby removes dust from the air filter 11.

In the state shown in Fig. 2, the automatic cleaner 12 is located at the standby position at which it does not performed cleaning. The automatic cleaner 12 moves leftward as viewed in the drawing to the return position when removing dust from the air filter 11. When the automatic cleaner 12 moves leftward and reaches the return position, the return position sensor 16b is activated. The automatic cleaner 12 is controlled to return to the original standby position based on the information from the return position sensor 16b. The substrate 17 connects the motor 19 to a motor driver 28 (described later) in the projector main body.

The video projector includes a controller, which is shown in the block diagram of Fig. 2.

The video projector includes a video signal input 21, a video signal processor 22, a liquid crystal panel driver 23, a liquid crystal panel 24, a light source lamp 25, and a lamp power supply 26, which are elements for generating an image. The video projector also includes an intake fan 27 related to the cooling system of the optical system, a motor driver 28, a clogging detector 29, and a memory 30. The video projector further includes a control unit 31 for operating the entire device, an operation unit 32, and a main power supply 33.

Video signals from various types of video reproduction devices are input to the video signal input 21. The video signal input to the video signal input 21 undergoes processing, such as A/D conversion and decoding for conversion to a digital signal. Then, the digital signal is output to the video signal processor 22.

In the video signal processor 22, typical video processing, such as scaling, gamma correction, and luminance correction, is performed on the input video signal. Then, the video signal is output to the liquid crystal panel driver 23.

In the liquid crystal panel driver 23, the video signal input from the video signal processor 22 is converted to a signal format to drive the liquid crystal cells for green light, red light, and blue light. Further, in the liquid crystal panel driver 23, drive pulses for driving the liquid crystal cells for the green light, red light, and blue light are simultaneously generated.

The liquid crystal panel 24 includes the liquid crystal cells for the green light, red light, and blue light. Each liquid crystal cell has a rotation angle that corresponds to the input video signal and produces an image by transmitting light from a separation optical system. The image is displayed on a screen separated from the projection lens 4 by a predetermined distance.

The light source lamp 25 uses a metal halide lamp, and a discharge lamp such as an extra high pressure mercury lamp as a light emitting body. The light source lamp 25 uses a reflector to emit the illumination light from the light emitting body as collimated light. The light source lamp 25 becomes hot during use and should be cooled. The light generated by the light source lamp 25 is transmitted to the liquid crystal panel through the optical system.

The lamp power supply 26 converts direct current (DC) voltage input from the main power supply 33 to a voltage having a waveform suitable for driving the light source lamp 25. The lamp power supply 26 outputs a voltage having a waveform suitable for each operation when the light source lamp 25 is activated or during normal operation.

The intake fan 27 draws ambient air into the shell 1 to cool hot components. Such components include the light source lamp 25, the liquid crystal panel 24, and the lamp power supply 26.

The motor driver 28 controls the motor 19 of the filter unit 10 when performing an automatic cleaning operation on the air filter 11. When removing dust from the air filter 11, the motor driver 28 drives the motor 19 to move the automatic cleaner 12 to the return position at the left end while rotating the rotation brush 18. When moving to the return position, the motor driver 28 drives the motor 19, based on information from the return position sensor 16b, and returns the automatic cleaner 12 to the original standby position. The automatic cleaner 12 is moved when the pinions 15, which are engaged with the racks 14, are rotated by the motor 19.

The clogging detector 29 includes a flow rate sensor. The clogging detector 29 determines clogging when the output voltage of the flow rate sensor changes. More specifically, the clogging detector 29 compares a change in the output voltage with a voltage threshold value stored in the memory 30 to determine whether or not clogging has occurred.

The memory 30 includes a ROM memory and a non-volatile RAM memory. The memory 30 stores control programs for the entire video projector, information (flag) necessary for determining the clogging state of the air filter 11, and programs of a cleaning operation sequence for controlling the filter unit 10. The filter unit 10 is controlled when the control unit 31 is activated in accordance with the information and programs stored in the memory 30.

The control unit 31 exchanges signals with each unit in the video projector to control operation of the entire video projector. The control unit 31 transmits a necessary control signal to the motor driver 28 while receiving information from the standby position sensor 16a and the return position sensor 16b when driving the filter unit 10.

The user uses the operation unit 32 to operate the video projector. The operation unit 32 includes parts operated by the user, such as an operation switch, a key, a remote controller, or an external computer. The information input from the operation unit 32 is processed in the control unit 31, and operation contents contained in the information is transmitted from the control unit 31 to each unit for execution.

The main power supply 33 is supplied with alternating current (AC) power from the external power supply and incorporates an AC/DC converter. The main power supply 33 generates stable DC voltage by performing processes such as transformation, rectification, and smoothing on the AC power in the AC/DC converter and supplies the generated DC voltage to each unit of the video projector.

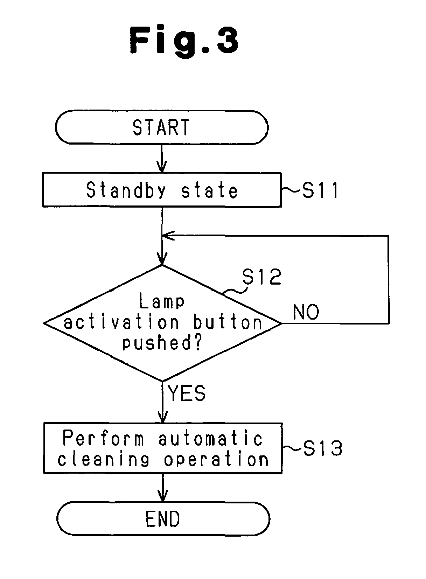

A cleaning operation sequence for the air filter performed by the control unit 31 according to the first embodiment of the present invention will now be described with reference to the flowchart of Fig. 3.

As shown in Fig. 3, in the cleaning operation sequence, when the video projector is connected to a commercial power supply or the like, the main power supply 33 is in a so-called standby state and waits for the operation switch to be turned on (step S11). Then, the control unit 31 determines whether or not a lamp activation button has been pushed (step S12). When the lamp activation button is pushed (YES in step S12), automatic cleaning operation is performed on the air filter 11 (step S13). When the activation button is not pushed (NO in step S12), step S12 is repeated. In the video projector of the first embodiment, the operation unit 32 includes the operation switch. The lamp is activated when the operation switch is turned on, and the lamp is deactivated when the operation switch is turned off. Accordingly, the pushing of the lamp activation button is equivalent to the pushing of the operation switch in the video projector of the first embodiment. The same applies to the following embodiments.

In the first embodiment, the pushing of the lamp activation button first performs automatic cleaning on the air filter 11. When the supply of power is cut off during the automatic cleaning operation, the automatic cleaning operation is resumed when power is restored and operation is started again thereafter.

The video projector of the first embodiment has the advantages described below.

×(1) Even when the supply of power is cut off during the cleaning operation sequence, the interrupted cleaning operation sequence is executed the next time the video projector is activated to complete the cleaning operation sequence. When the supply of power is cut off during the automatic cleaning operation, the operation is resumed at when power is restored and operation is started again thereafter.

×(2) When starting operation of the video projector, an automatic cleaning operation is performed on the air filter 11 regardless of whether or not the air filter 11 is clogged. Therefore, the air intake capacity of the cooling system is restored when the video projector is activated. This allows for efficient cooling from when the video projector is activated.

### Second Embodiment

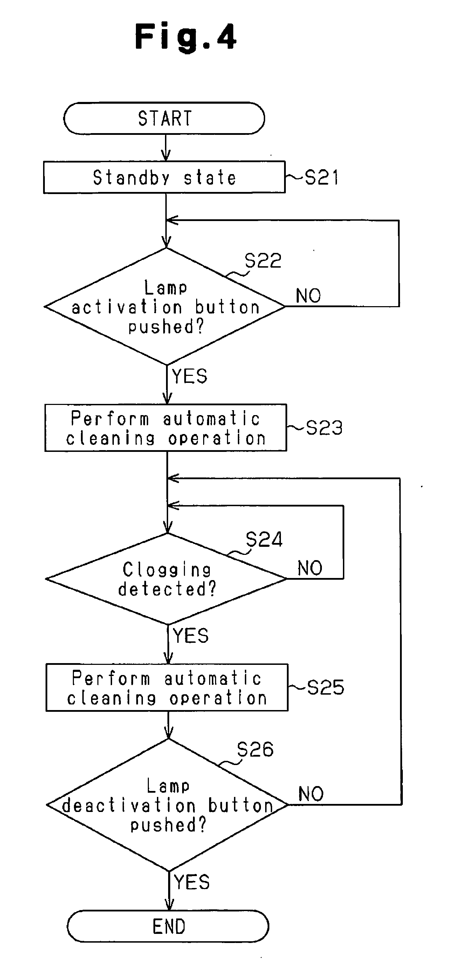

A video projector of a second embodiment will now be described with reference to the flowchart of Fig. 4. The video projector of the second embodiment differs from the video projector of the first embodiment in the cleaning operation sequence. The cleaning operation sequence, which is the difference from the first embodiment, will be mainly described below.

As shown in Fig. 4, in the cleaning operation sequence of the second embodiment, step S21 to step S23 in the second embodiment are the same as step S11 to step S13 in the first embodiment. A lamp activation button in the second embodiment is an operation switch of the operation unit 32 in the same manner as the first embodiment. When the lamp activation button is pushed to start operation of the video projector, an automatic cleaning operation is first performed on the air filter 11.

After the automatic cleaning operation of S23 ends, normal operation is performed. The control unit 31 determines whether or not the air filter 11 is clogged with the clogging detector 29 of the air filter 11 during normal operation (step S24). The clogging detector 29 determines clogging of the air filter 11 based on a change in the output voltage of the flow rate sensor as described above. When it is determined that the air filter 11 is clogged (YES in step S24), the automatic cleaning operation is performed again on the air filter 11 (step S25). After the automatic cleaning operation is completed, until a lamp deactivation button is pushed, steps S24 and S25 are repeated (step S26 → step S24 → step S25 → step S26). In the second embodiment, the pushing of lamp deactivation button is equivalent to the pushing of the operation switch to deactivate the video projector. The same applies to the following embodiments. In this manner, in the second embodiment, an automatic cleaning operation is always performed on the air filter 11 when starting operation of the video projector, and an automatic cleaning operation is also performed on the air filter 11 during normal operation whenever the air filter 11 is clogged.

Accordingly, in the second embodiment, when the supply of power is cut off during a cleaning operation sequence, the cleaning operation sequence is always executed when operation starts next to perform an automatic cleaning operation on the air filter 11. When the supply of power is cut off during an automatic cleaning operation, the automatic cleaning operation is resumed when operation is started thereafter.

In addition to advantages (1) and (2) of the first embodiment, the video projector of the second embodiment has the following advantage.

×(3) Whenever clogging of the air filter 11 is detected during normal operation of the video projector, an automatic cleaning operation is performed on the air filter 11 to restore the air intake capacity of the air filter 11. Accordingly, the video projector is suitable for operations that continue over a long period of time.

### Third Embodiment

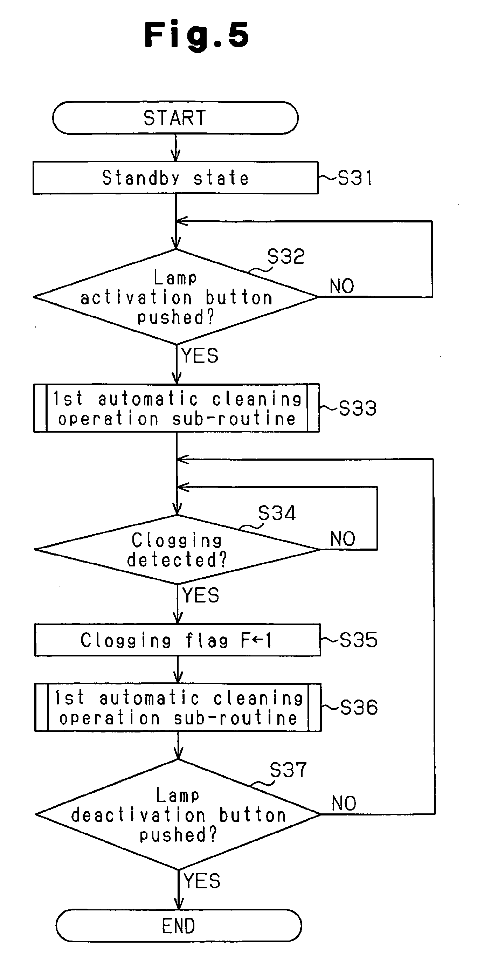

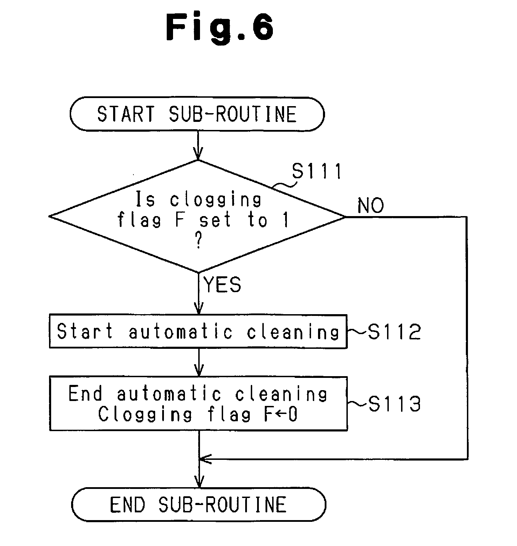

A video projector of a third embodiment will now be described with reference to the flowcharts of Figs. 5 and 6. The video projector of the third embodiment differs from the video projector of the first embodiment in the cleaning operation sequence. The cleaning operation sequence, which is the difference from the first embodiment, will now be mainly described.

As shown in Fig. 5, in the same manner as the first embodiment, in the cleaning operation sequence of the third embodiment, the video projector is in the standby state when the main power supply 33 is connected to a commercial power supply or the like (step S31) and the control unit 31 determines whether the lamp activation button has been pushed (step S32). In the third embodiment, the control unit 31 implements a first automatic cleaning operation sub-routine (step S33) when the activation button is pushed (YES in step S32).

As shown in Fig. 6, the first automatic cleaning operation sub-routine performs an automatic cleaning operation on the air filter 11 when the air filter 11 is clogged. In other words, when the first automatic cleaning operation sub-routine starts, the control unit 31 determines whether or not a clogging flag F, which indicates clogging, is "1" (step S111). The clogging flag F is set to "1" and stored in a nonvolatile memory when clogging is detected by the clogging detector 29. Further, the clogging flag F is reset to "0" when an automatic cleaning operation performed on the air filter 11 ends. When the control unit 31 determines that the clogging flag F is "1" (i.e., air filter 11 is clogged), an automatic cleaning operation is performed on the air filter 11 (step S112). Further, the clogging flag F is reset to "0" (step S113) when the automatic cleaning operation ends. This terminates the first automatic cleaning operation sub-routine.
Accordingly, in the third embodiment, when operation of the video projector starts, an automatic cleaning operation is performed on the air filter 11 only when the air filter 11 is clogged.

After the first automatic cleaning operation sub-routine is terminated, the clogging state of the air filter 11 is repeatedly detected by the clogging detector 29 (step S34) during normal operation until clogging of the air filter 11 is detected. When clogging of the air filter 11 is detected, the clogging flag F indicating the clogging state of the air filter 11 is set to 1 and stored in the nonvolatile memory (step S35), and the control unit 31 executes the first automatic cleaning operation sub-routine (step S36). Accordingly, in the third embodiment, whenever the air filter 11 is clogged during normal operation of the video projector, an automatic cleaning operation of the air filter 11 is performed (NO in step S37 → step S34 → step S35 → step S36 → step S37). When the supply of power is cut off during the cleaning operation sequence (YES in step S37), the state of the clogging flag F remains in the nonvolatile memory.

Accordingly, in the third embodiment, when the supply of power is cut off during a cleaning operation sequence, an automatic cleaning operation is always performed when the video projector starts operation next time. An automatic cleaning operation is also performed whenever the air filter 11 is clogged. When the supply of power is cut off during an automatic cleaning operation, the operation is ends without resetting the clogging flag F to "0". Thus, the clogging flag F is "1" when the video projector starts operation the next time. In this manner, the first automatic cleaning operation sub-routine is started when the video projector is activated, and the automatic cleaning operation of the air filter 11 is resumed.

In addition to advantage (1) of the first embodiment and advantage (3) of the second embodiment, the video projector of the third embodiment has the advantages described below.

×(4) In the second embodiment, an automatic cleaning operation is performed on the air filter 11 regardless of whether or not the air filter 11 is clogged when the video projector starts to operate. However, in the third embodiment, an automatic cleaning operation is performed on the air filter 11 only when the value of the clogging flag F is "1 ", that is, only when the air filter 11 is clogged. Accordingly, automatic cleaning is performed efficiently and effectively.

×(5) In the same manner as the second embodiment, an automatic cleaning operation is performed on the air filter 11 whenever clogging of the air filter 11 is detected during normal operation of the video projector to restore the air intake capacity of the air filter 11. Accordingly, the video projector is suitable for operations that continue over a long period of time.

### Fourth Embodiment

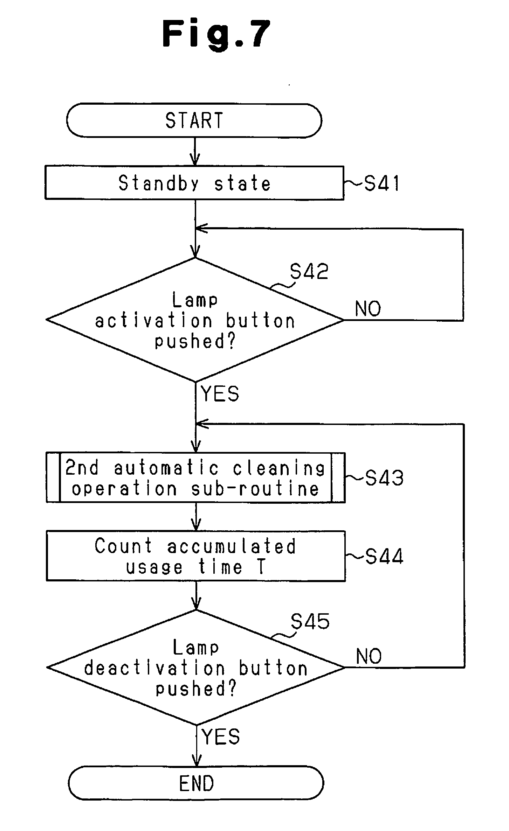

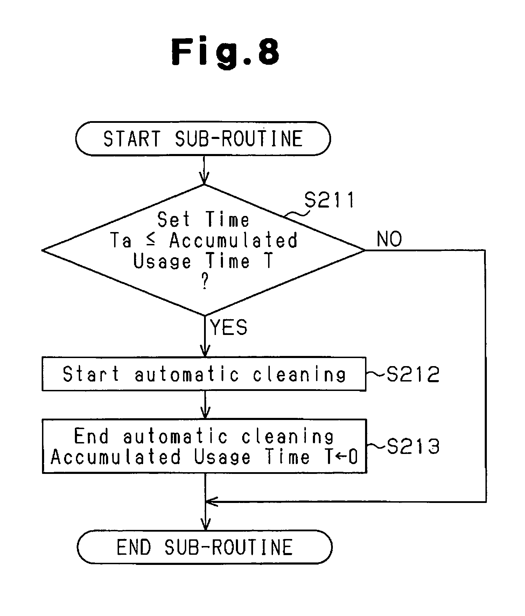

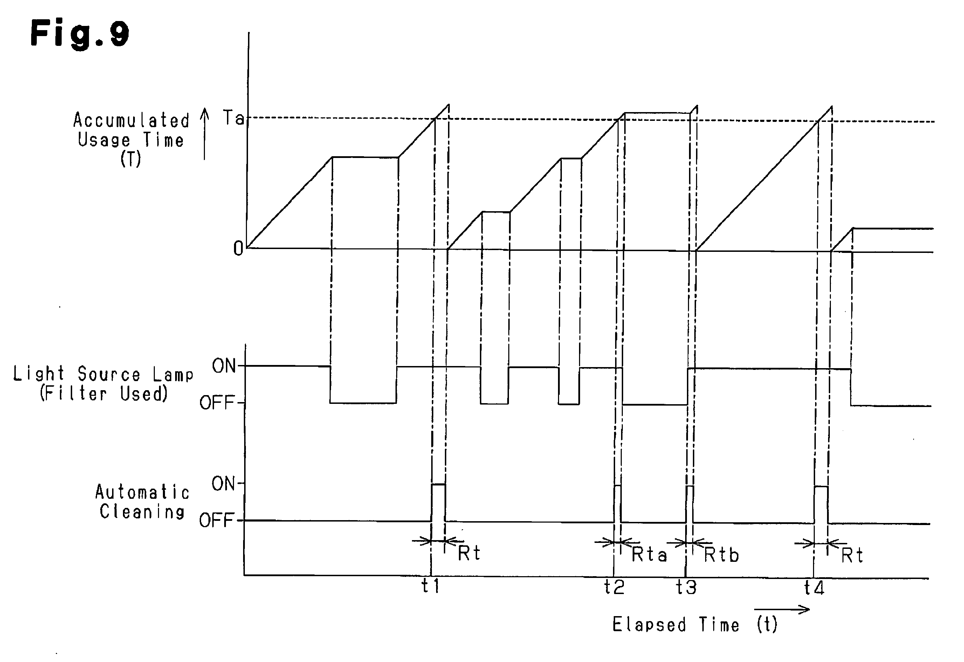

A video projector of a fourth embodiment will now be described with reference to the flowchart of Figs. 7 and 8, and a timing chart of Fig. 9. The video projector of the fourth embodiment mainly differs from the video projector of the first embodiment in the cleaning operation sequence. The controller also differs in part. The difference from the first embodiment will now be mainly described.

First, the difference in the controller will be described. In the first embodiment, the clogging detector 29 is used to detect the clogging of the air filter 11. However, in the fourth embodiment, a time measurement unit for measuring an accumulated usage time T of the air filter 11 is used in place of the clogging detector 29 of Fig. 2.

The accumulated usage time T of the air filter 11 will now be described. When the lamp activation button of the video projector is pushed and the operation of the video projector is started, an intake operation for cooling is started. Thus, the air filter 11 is used. When the lamp deactivation button of the video projector is pushed, the intake operation is stopped. Accordingly, the usage time of the air filter 11 is the time from when the intake operation starts to when the intake operation stops. Further, the accumulated usage time T of the air filter 11 is an accumulation of the usage time. In this embodiment, the accumulated usage time T of the air filter 11 is the same as the accumulated operation time of the video projector. This definition applies to the following description.

In the cleaning operation sequence of the fourth embodiment, the accumulated usage time T is stored in the nonvolatile memory when the accumulated usage time T measured by the time measurement unit becomes greater than or equal to a predetermined set time Ta. Then, an automatic cleaning operation is performed on the air filter 11. The air filter 11 clogs differently in accordance with the environment in which it is used. Thus, when clogging is estimated from the accumulated usage time T, the estimation may be inaccurate. However, a certain time margin may be included for the estimation. The set time Ta includes such time margin.

As shown in Fig. 7, in the same manner as in the first embodiment, when the main power supply 33 is connected to a commercial power supply or the like, the video projector is in a standby state for the cleaning operation sequence of the fourth embodiment (step S41). Then, the control unit 31 determines whether the lamp activation button has been pushed. When the lamp activation button is pushed (YES in step S42), the control unit 31 implements a second automatic cleaning operation sub-routine (step S43).

As shown in Fig. 8, the second automatic cleaning operation sub-routine performs an automatic cleaning operation on the air filter 11 when the accumulated usage time T of the air filter 11 becomes greater than or equal to the predetermined set time Ta. In other words, when the second automatic cleaning operation sub-routine is started, the control unit 31 determines whether or not the accumulated usage time T of the air filter 11 is greater than or equal to the set time Ta (step S211). When the accumulated usage time T is greater than the set time Ta, that is, when the air filter 11 is likely to be clogged, an automatic cleaning operation is performed on the air filter 11 (step S212). When the automatic cleaning operation ends, the accumulated usage time T is reset to "0" (step S213), and the second automatic cleaning operation sub-routine is terminated. Accordingly, in the fourth embodiment, when the video projector starts to operate, an automatic cleaning operation is performed on the air filter 11 only when the accumulated usage time T is greater than or equal to the set time Ta.

After the second automatic cleaning operation sub-routine is terminated, normal operation is performed and a new accumulated usage time T is measured from zero (step S44). The accumulated usage time T of the air filter 11 is measured and the accumulated usage time T stored in the nonvolatile memory is updated until the operation of the video projector is stopped, and the process is returned to the step before the second automatic cleaning operation sub-routine (NO in step S45 → step S43 → step S44 → step S45). Accordingly, in the fourth embodiment, during normal operation of the video projector, whenever the accumulated usage time T of the air filter 11 becomes greater than or equal to the set time Ta (step S211), an automatic cleaning operation is performed on the air filter 11 (step S212, S213). Further, when the supply of power is cut off during the cleaning operation sequence, the accumulated usage time T remains stored. For instance, when the supply of power is cut off during normal operation and the operation is stopped, the usage time of the air filter 11, which is the same as the operation time of the video projector, taken until the power cut is stored. When the supply of power is cut off during the automatic cleaning operation, the accumulated usage time T is not reset to zero. Thus, the accumulated usage time T (value greater than or equal to set time Ta) taken when starting the automatic cleaning operation is stored in the nonvolatile memory.

Accordingly, in the fourth embodiment, an automatic cleaning operation is always performed on the air filter 11 when the supply of power is cut off during the cleaning operation sequence and when the accumulated usage time T is greater than or equal to the set time Ta as the video projector starts to operate and as the video projector performs normal operation. When the supply of power is cut off during the automatic cleaning operation, the accumulated usage time T is greater than or equal to the set time T when the video projector starts to operate afterward. Thus, the second automatic cleaning operation sub-routine is started, and the automatic cleaning operation of the air filter 11 is thereby resumed. Such operating operation is shown in the timing chart of Fig. 9.

In Fig. 9, after time t1, time t2, and time t4 elapse from when the video projector starts operation, when the accumulated usage time T of the air filter 11 becomes greater than or equal to the set value Ta, the video projector continues to display images while an automatic cleaning operation is performed on the air filter 11 in parallel.

However, the supply of power is cut off during the automatic cleaning operation after time t2. Thus, the automatic cleaning operation is interrupted when a cleaning time Rta is still shorter than a normal cleaning time Rt. Thus, the accumulated usage time T is not reset to "0" when the cleaning operation ends in an interrupted manner. When the video projector starts to operate thereafter, the process proceeds in the order of steps S41, S42, and S43 and the second automatic cleaning operation sub-routine is started. In this case, the accumulated usage time T is greater than the set time Ta. Thus, when the automatic cleaning operation is started after time t3, the automatic cleaner 12 moves from the position at which it was stopped when power was cut and the remaining automatic cleaning operation is performed. As a result, the automatic cleaning operation is completed within a cleaning time Rtb that is shorter than the normal cleaning time Rt.

The operation is started and stopped three times while as time t1 and time t2 elapses. Here, the accumulated usage time T is less than the set time Ta. Thus, an automatic cleaning operation is not performed on the air filter 11, and the stored accumulated usage time T is just increased when the video projector operates the next time.

In addition to advantage (1) of the first embodiment, the video projector of the fourth embodiment has the following advantage.

×(6) When the accumulated usage time T reaches the set time Ta during the operation of the video projector, an automatic cleaning operation is performed on the air filter 11 regardless of the actual clogged state of the air filter 11. When the supply of power is cut off during the cleaning operation sequence of the air filter 11, the cleaning operation sequence of the air filter 11 is resumed when the video projector starts to operate thereafter. Thus, in the fourth embodiment, an automatic cleaning operation is performed on the air filter 11 without using the clogging detector 29, which detects clogging. This ensures that the air intake capacity of the air filter 11 is restored.

### Fifth Embodiment

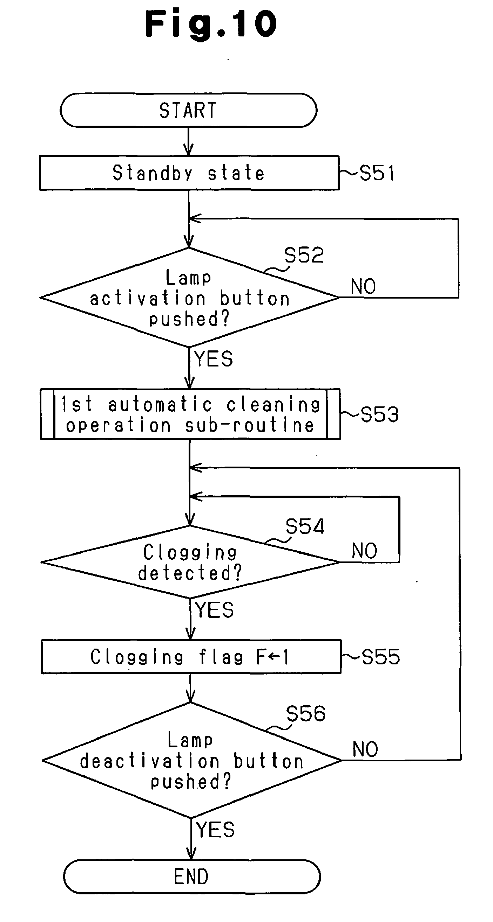

A video projector of a fifth embodiment will now be described with reference to the flowcharts of Fig. 10 and Fig. 6. The video projector of the fifth embodiment differs from the video projector of the first embodiment in the cleaning operation sequence. The cleaning operation sequence, which is the difference from the first embodiment, will be mainly described below.

As shown in Fig. 10, when the main power supply 33 is connected to a commercial power supply or the like, the video projector is in a standby state for the cleaning operation sequence of the fourth embodiment (step S51). Then, the control unit 31 determines whether or not the lamp activation button has been pushed. When the lamp activation button has been pushed (YES in step S52), the control unit 31 implements the first automatic cleaning operation sub-routine (step S53).

The first automatic cleaning operation sub-routine is similar to that described in the third embodiment, and the contents of the first automatic cleaning operation sub-routine are the same as those shown in Fig. 6. More specifically, as shown in Fig. 6, when the first automatic cleaning operation sub-routine is started, the control unit 31 determines whether or not the clogging flag F, which indicates the clogging state of the air filter 11, is "1" (step S111). When the clogging flag F is set to "1 ", that is, when the air filter 11 is clogged, an automatic cleaning operation is performed on the air filter 11 (step S112). Further, when the automatic cleaning operation ends, the clogging flag F is reset to "0" (step S113). This terminates the first automatic cleaning operation sub-routine. Accordingly, an automatic cleaning operation is performed on the air filter 11 only when the air filter 11 is clogged as the video projector starts to operate.

After the first automatic cleaning operation sub-routine is terminated, the clogging state of the air filter 11 is repeatedly detected by the clogging detector 29 (step S54) until clogging is detected during normal operation. When clogging of the air filter 11 is detected, the clogging flag F, which indicates the clogging state of the air filter 11, is set to 1 and stored in the nonvolatile memory (step S55). Detection of the clogging state of the air filter 11 continues (NO in step S56 → step S54 → step S55 → step S56) until the lamp deactivation button is pushed (i.e., until operation switch is turned off).

In this manner, in the fifth embodiment, when the video projector starts to operate, an automatic cleaning operation is performed on the air filter 11 only when the clogging flag F is set to "1" (when the air filter 11 is clogged). Further, the clogging state of the air filter 11 is monitored during normal operation. When the air filter 11 is clogged, the clogging flag is set to "1" and stored. However, an automatic cleaning operation is not performed on the air filter 11. Accordingly, the clogging of the air filter 11 is just monitored during normal operation. Further, when the supply of power is cut off during the cleaning operation sequence, the state of the clogging flag F remains stored in the nonvolatile memory. Thus, the automatic cleaning operation of the air filter 11 is resumed when the first automatic cleaning operation sub-routine is implemented thereafter as the video projector starts to operate.

In addition to advantage (1) of the first embodiment, the video projector of the fifth embodiment has the advantages described below.

×(7) As the video projector starts to operate, an automatic cleaning operation is performed on the air filter 11 only when the value of the clogging flag F is "1", that is, when the air filter 11 is clogged. Thus, an automatic cleaning operation is not performed during normal operation. The display of an image by the video projector is thus not inhibited by the noise of the automatic cleaning operation.

×(8) In the cleaning operation sequence, when the operation of the electronic device is terminated without the automatic cleaning operation of the air filter 11 being completed due to the supply of power being cut off, the automatic cleaning operation is stopped in an interrupted manner, and the clogging flag is stored as "1". Thus, when the electronic device starts to operate thereafter, the automatic cleaning operation of the air filter 11 is resumed since the clogging flag is "1" when the first automatic cleaning operation sub-routine is implemented.

### Sixth Embodiment

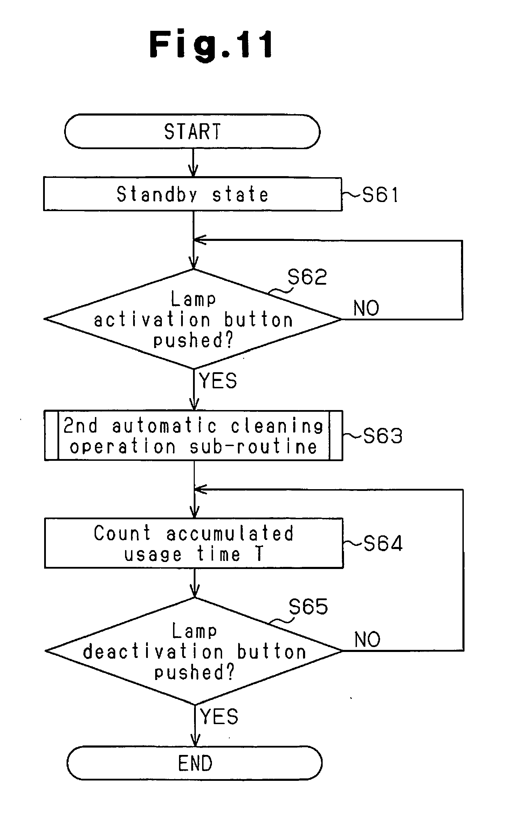

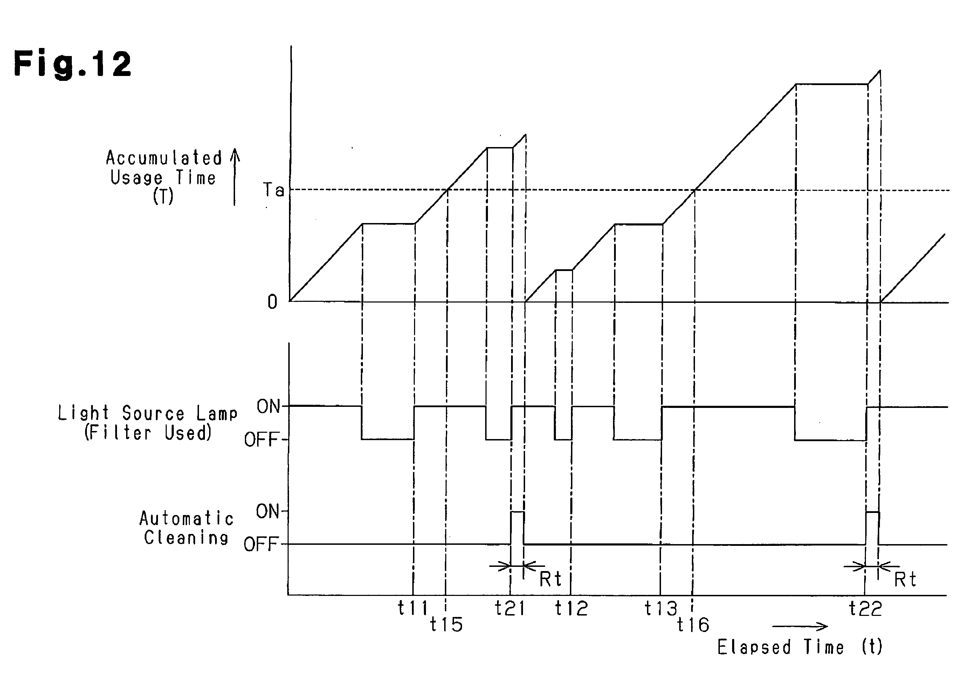

A video projector of a sixth embodiment will now be described with reference to the flowcharts of Figs. 11 and 8 and a timing chart of Fig. 12. The video projector of the sixth embodiment differs from the video projector of the first embodiment in the cleaning operation sequence and part of the controller. The difference from the first embodiment will be mainly described below.

First, the difference of the controller from the first embodiment is the same as the difference of the fourth embodiment from the first embodiment. More specifically, the control block diagram of the sixth embodiment is the same as the fourth embodiment. In the sixth embodiment, a time timing unit is used in place of the clogging detector 29 shown in Fig. 2.

The cleaning operation sequence is similar to the fourth embodiment in that an automatic cleaning operation is performed on the air filter 11 when the accumulated usage time T, which is measured by the time timing unit, is greater than or equal to the predetermined set time Ta. However, the actual control contents differ from the fourth embodiment. The contents will now be described in more detail.

In the same manner as in the first embodiment, in the cleaning operation sequence of the sixth embodiment, when the main power supply 33 is connected to a commercial power supply or the like, the video projector is in a standby state for the cleaning operation sequence of the sixth embodiment (step S61). Then, the control unit 31 determines whether or not the lamp activation button has been pushed. When the lamp activation button has been pushed (YES in step S62), the control unit 31 implements the second automatic cleaning operation sub-routine (step S63).

The second automatic cleaning operation sub-routine is similar to that of the fourth embodiment, and the contents of the second automatic cleaning operation sub-routine are the same as those shown in Fig. 8. In other words, as shown in Fig. 8, when the second automatic cleaning operation sub-routine is started, the control unit 31 determines whether or not the accumulated usage time T is greater than or equal to the set time Ta (step S211). When the accumulated usage time T is greater than the set time Ta, that is, when the air filter 11 is likely to be clogged, an automatic cleaning operation is performed on the air filter 11 (step S212). When the automatic cleaning operation ends, the accumulated usage time T is reset to "0" (step S213), and the second automatic cleaning operation sub-routine is terminated. Thus, an automatic cleaning operation is performed on the air filter 11 only when the air filter 11 is clogged as the video projector starts to operate.

After the second automatic cleaning operation sub-routine is terminated, the accumulated usage time T is measured until the lamp deactivation button is pushed, and the accumulated usage time T stored in the nonvolatile memory is updated (steps S64 and S65). Accordingly, when normal operation is performed after the second automatic cleaning operation sub-routine is executed, the accumulated usage time T of the air filter is measured but the automatic cleaning operation of the air filter 11 is not performed. Further, when the supply of power is cut off during the cleaning operation sequence, the automatic cleaning operation of the air filter 11 remains stored in the nonvolatile memory. When the supply of power is cut off during the automatic cleaning operation, the accumulated usage time T is greater than or equal to the set time Ta as the video projector starts to operate thereafter. Therefore, the second automatic cleaning operation sub-routine is started and the automatic cleaning operation of the air filter 11 is resumed. Such operating operation is shown in the timing chart of Fig. 12.

In Fig. 12, the video projector restarts operation from the state from a suspended state when time t11, time t12, and time t13 elapses from when the video projector first starts to operate. At such time points, the accumulated usage time T of the air filter 11 is not greater than or equal to the set time Ta. Thus, an automatic cleaning operation is not performed on the air filter 11 when the video projector stops and starts operation. The accumulated usage time T, taken when operation is stopped, is continuously measured when operation is started thereafter. The accumulated usage time T becomes greater than or equal to the set time Ta after time t15 and time t16 elapse from when the video projector starts to operate. However, an automatic cleaning operation is not performed since the video projector is undergoing normal operation. The accumulated usage time T is greater than or equal to the set time Ta after time t21 and time t22 elapse. In these states, operation is started from a suspended state. Thus, an automatic cleaning operation is performed on the air filter 11, and the air intake function of the air filter 11 is restored.

In addition to advantage (1) of the first embodiment, the video projector of the sixth embodiment has the advantages described below.

×(9) As the video projector starts to operate, an automatic cleaning operation is performed on the air filter 11 only when the accumulated usage time T is greater than or equal to the set time T1, that is, when the air filter 11 is clogged. An automatic cleaning operation is thus not performed during normal operation. Thus, the display of an image by the video projector is not inhibited by the noise of the automatic cleaning operation.

×(10) In the cleaning operation sequence, if the accumulated usage time T is greater than or equal to the set time Ta when the supply of power is cut off and the electronic device stops operating before the automatic cleaning operation of the air filter 11 is completed, the automatic cleaning operation of the air filter 11 is resumed when the electronic device starts to operate thereafter.

It should be apparent to those skilled in the art that the present invention may be embodied in many other specific forms without departing from the scope of the invention. Particularly, it should be understood that the present invention may be embodied in the following forms.

In the first embodiment, the clogging detector 29 may be eliminated since it is not directly involved with the cleaning operation sequence.

In the second, third, and fifth embodiments, the clogging detector 29 determines clogging of the air filter by detecting changes in the output voltage of a flow rate sensor. However, the present invention is not limited in such a manner. For example, the clogging detector 29 may detect clogging based on changes in the ventilation resistance or flow rate of the air filter.

In the fourth and sixth embodiments, the set time Ta may be set by the user. The ideal set time Ta is set by predicting the clogging of the air filter 11. However, it is difficult to determine such a numerical value in an unambiguous manner since the value would differ depending on the usage condition. Accordingly, the user may roughly assess whether or not the video projector will be used under severe conditions and determine the set value based on the assessed environment.

In the embodiments described above, the electronic device is a video projector. However, the electronic device is not limited in such a manner and may be another type of electronic device that draws ambient air into a housing. For example, the electronic device may be a computer, an air conditioner, or a humidifier.

The present examples and embodiments are to be considered as illustrative and not restrictive, and the invention is not to be limited to the details given herein, but may be modified within the scope and equivalence of the appended claims.

## Claims

1. an electronic device comprising:
a housing (1):
an air inlet (3) arranged in the housing (1) to drawn in air;
an air filter (11) coupled to the air inlet (3);
a cleaner (12) for cleaning the air filter (11); and
a control unit (31) for controlling the cleaner (12), wherein the control unit (31) executes a cleaning operation sequence to automatically clean the air filter (11), ***characterized in that**:*
when power supplied to the electronic device is cut off during the cleaning operation sequence and the electronic device restarts operation thereafter, the control unit (31) controls the cleaner (12) to complete the interrupted cleaning operation sequence.

2. The electronic device according to claim 1, wherein the cleaning operation sequence includes performing automatic cleaning operation on the air filter (11) when the electronic device restarts operation.

3. The electronic device according to claim 1, wherein the cleaning operation sequence includes:
performing an automatic cleaning operation on the air filter (11) when the electronic device restarts operation; and
performing an automatic cleaning operation on the air filter (11) when clogging of the air filter (11) is detected during normal operation of the electronic device after the automatic cleaning operation ends.

4. The electronic device according to claim 1, wherein the cleaning operation sequence includes:
setting a clogging flag to a first value, which indicates that clogging of the air filter (11) has been detected, when clogging of the air filter (11) is detected;
setting the clogging flag to a second value, which indicates that clogging of the air filter (11) has not been detected, when an automatic cleaning operation performed on the air filter (11) ends;
performing the automatic cleaning operation on the air filter (11) if the clogging flag is set to the first value when the electronic device restarts operation; and
performing the automatic cleaning operation on the air filter (11) if clogging of the air filter (11) is detected and the clogging flag is set to the first value during normal operation of the electronic device.

5. The electronic device according to claim 1, further comprising a nonvolatile memory (30) connected to the control unit (31), wherein the cleaning operation sequence includes:
measuring an accumulated usage time of the air filter (11) and storing a measurement value of the accumulated usage time in the nonvolatile memory (30);
performing an automatic cleaning operation on the air filter (11) when the measurement value of the accumulated usage time becomes greater than or equal to a value indicating a set time, which is set by predicting clogging of the air filter (11); and
resetting the measurement value of the accumulated usage time to an initial value when the automatic cleaning operation ends and measuring the accumulated usage time from an initial value.

6. The electronic device according to claim 1, further comprising a nonvolatile memory (30) connected to the control unit (31), wherein the nonvolatile memory (30) stores a clogging flag indicating a clogging state of the air filter (11), and the cleaning operation sequence includes:
storing, in the nonvolatile memory (30), the clogging flag set to a first value, which indicates that clogging of the air filter (11) has been detected, when clogging of the air filter (11) is detected during operation of the electronic device;
performing an automatic cleaning operation on the air filter (11) only if the clogging flag is set to the first value when the electronic device restarts operation; and
storing, in the nonvolatile memory (30), the clogging flag set to a second value, which indicates that clogging of the air filter (11) has not been detected, when the automatic cleaning operation ends.

7. The electronic device according to claim 1, further comprising a nonvolatile memory (30) connected to the control unit (31), wherein the cleaning operation sequence includes:
measuring an accumulated usage time of the air filter (11), and storing a measurement value of the accumulated usage time in the nonvolatile memory (30);
performing an automatic cleaning operation on the air filter (11) only if the measurement value of the accumulated usage time is greater than or equal to a value indicating a predetermined time when the electronic device restarts operation; and
resetting the measurement value of the accumulated usage time to an initial value when the automatic cleaning operation ends and measuring the accumulated usage time from the initial value.

8. The electronic device according to claim 1, further comprising a clogging detector (29) connected to the control unit (31), wherein
the clogging detector (29) detects clogging of the air filter (11), and
the control unit (31) executes the cleaning operation sequence when the clogging detector (29) detects clogging of the air filter (11).

9. The electronic device according to claim 8, wherein the clogging detector (29) includes a flow rate sensor arranged at a downstream side of the air filter (11), and the clogging detector (29) generates a detection signal indicating a clogging state of the air filter (11) based on an output of the flow rate sensor.

## Patentansprüche

1. Elektronische Vorrichtung die Folgendes umfasst:
ein Gehäuse (1);
einen Lufteinlass (3), der im Gehäuse (1) angeordnet ist, um Luft anzusaugen;
ein Luftfilter (11), das mit dem Lufteinlass (3) verbunden ist;
einen Reiniger (12) zum Reinigen des Luftfilters (11); und
eine Steuerungseinheit (31) zum Steuern des Reinigers (12), wobei
die Steuerungseinheit (31) eine Reinigungsbetriebsabfolge ausführt um das Luftfilter (11) automatisch zu reinigen, **dadurch gekennzeichnet, dass**:
wenn die Stromversorgung der elektronischen Vorrichtung während der Reinigungsbetriebsabfolge unterbrochen wird und die elektronische Vorrichtung danach den Betrieb wieder aufnimmt, die Steuerungseinheit (31) den Reiniger (12) steuert um die unterbrochene Reinigungsbetriebsabfolge abzuschließen.

2. Elektronische Vorrichtung gemäß Anspruch 1, wobei die Reinigungsbetriebsabfolge Ausführen automatischen Reinigungsbetriebs an dem Luftfilter (11) beinhaltet, wenn die elektronische Vorrichtung den Betrieb wieder aufnimmt.

3. Elektronische Vorrichtung gemäß Anspruch 1, wobei die Reinigungsbetriebsabfolge beinhaltet:
Ausführen eines automatischen Reinigungsbetriebs an dem Luftfilter (11), wenn die elektronische Vorrichtung den Betrieb wieder aufnimmt; und
Ausführen eines automatischen Reinigungsbetriebs an dem Luftfilter (11), wenn Zusetzen des Luftfilters (11) im Normalbetrieb der elektronischen Vorrichtung erkannt wird, nachdem der automatische Reinigungsbetrieb geendet hat.

4. Elektronische Vorrichtung gemäß Anspruch 1, wobei die Reinigungsbetriebsabfolge beinhaltet:
Setzen einer Zugesetzt-Markierung auf einen ersten Wert, der anzeigt, dass Zusetzen des Luftfilters (11) erkannt wurde, wenn Zusetzen des Luftfilters (11) erkannt wird;
Setzen der Zugesetzt-Markierung auf einen zweiten Wert, der anzeigt, dass Zusetzen des Luftfilters (11) nicht erkannt wurde, wenn ein automatischer Reinigungsbetrieb, der an dem Luftfilter (11) ausgeführt wird, endet;
Ausführen des automatischen Reinigungsbetriebs an dem Luftfilter (11) falls die Zugesetzt-Markierung auf den ersten Wert gesetzt ist wenn die elektronische Vorrichtung den Betrieb wieder aufnimmt; und
Ausführen des automatischen Reinigungsbetriebs an dem Luftfilter (11) falls Zusetzen des Luftfilters (11) erkannt wird und die Zugesetzt-Markierung auf den ersten Wert gesetzt ist im Normalbetrieb der elektronischen Vorrichtung.

5. Elektronische Vorrichtung gemäß Anspruch 1, weiterhin umfassend einen nichtflüchtigen Speicher (30), der mit der Steuerungseinheit (31) verbunden ist, wobei die Reinigungsbetriebsabfolge beinhaltet:
Messen einer aufgelaufenen Nutzdauer des Luftfilters (11) und Speichern eines Messwerts der aufgelaufenen Nutzdauer im nichtflüchtigen Speicher (30);
Ausführen eines automatischen Reinigungsbetriebs an dem Luftfilter (11) wenn der Messwert der aufgelaufenen Nutzdauer größer oder gleich einem Wert wird, der eine festgelegte Zeit angibt, die durch Prognostizieren des Zusetzens des Luftfilters (11) festgelegt wird; und
Zurücksetzen des Messwerts der aufgelaufenen Nutzdauer auf einen Ausgangswert, wenn der automatische Reinigungsbetrieb endet und Messen der aufgelaufenen Nutzdauer von einem Ausgangswert aus.

6. Elektronische Vorrichtung gemäß Anspruch 1, weiterhin umfassend einen nichtflüchtigen Speicher (30), der mit der Steuerungseinheit (31) verbunden ist, wobei der nichtflüchtige Speicher (30) eine Zugesetzt-Markierung, die einen Zugesetzt-Zustand des Luftfilters (11) anzeigt, speichert und die Reinigungsbetriebsabfolge beinhaltet:
Speichern, im nichtflüchtigen Speicher (30), der Zugesetzt-Markierung, die auf einen ersten Wert, der anzeigt, dass Zusetzten des Luftfilters (11) erkannt wurde, gesetzt ist, wenn Zusetzen des Luftfilters (11) während des Betriebs der elektronischen Vorrichtung erkannt wird;
Ausführen eines automatischen Reinigungsbetriebs an dem Luftfilter (11) nur, falls die Zugesetzt-Markierung auf den ersten Wert gesetzt ist, wenn die elektronische Vorrichtung den Betrieb wieder aufnimmt; und
Speichern, im nichtflüchtigen Speicher (30), der Zugesetzt-Markierung, die auf einen zweiten Wert, der anzeigt, dass Zusetzen des Luftfilters (11) nicht erkannt wurde, gesetzt ist, wenn der automatische Reinigungsbetrieb endet.

7. Elektronische Vorrichtung gemäß Anspruch 1, weiterhin umfassend einen nichtflüchtigen Speicher (30), der mit der Steuerungseinheit (31) verbunden ist, wobei die Reinigungsbetriebsabfolge beinhaltet:
Messen einer aufgelaufenen Nutzdauer des Luftfilters (11) und Speichern eines Messwerts der aufgelaufenen Nutzdauer im nichtflüchtigen Speicher (30);
Ausführen eines automatischen Reinigungsbetriebs an dem Luftfilter (11) nur falls der Messwert der aufgelaufenen Nutzdauer größer oder gleich einem Wert ist, der eine vorbestimmte Zeit angibt, wenn die elektronische Vorrichtung den Betrieb wieder aufnimmt; und
Zurücksetzen des Messwerts der aufgelaufenen Nutzdauer auf einen Ausgangswert, wenn der automatische Reinigungsbetrieb endet, und Messen der aufgelaufenen Nutzdauer vom Ausgangswert aus.

8. Elektronische Vorrichtung gemäß Anspruch 1, weiterhin umfassend einen Zusetz-Detektor (29), der mit der Steuerungseinheit (31) verbunden ist, wobei
der Zusetz-Detektor (29) Zusetzen des Luftfilters (11) erkennt, und
die Steuerungseinheit (31) die Reinigungsbetriebsabfolge ausführt, wenn der Zusetz-Detektor (29) Zusetzen des Luftfilters (11) erkennt.

9. Elektronische Vorrichtung gemäß Anspruch 8, wobei der Zusetz-Detektor (29) einen Flussratensensor, der an einer Abstromseite des Luftfilters (11) angeordnet ist, beinhaltet und der Zusetz-Detektor (29) ein Erkennungssignal erzeugt, das einen zugesetzten Zustand des Luftfilters (11) basierend auf einer Ausgabe des Flussratensensors anzeigt.

## Revendications

1. Dispositif électronique comprenant :
un logement (1) ;
une entrée d'air (3) agencée dans le logement (1) pour faire passer de l'air ;
un filtre à air (11) couplé à l'entrée d'air (3) ;
un dispositif de nettoyage (12) pour nettoyer le filtre à air (11) ; et
une unité de commande (31) pour commander le dispositif de nettoyage (12), dans lequel
l'unité de commande (31) exécute une séquence d'opérations de nettoyage pour nettoyer automatiquement le filtre à air (11), **caractérisé en ce que** :
lorsque le courant fourni au dispositif électronique est coupé au cours de la séquence d'opérations de nettoyage et que le dispositif électronique redémarre l'opération par la suite, l'unité de commande (31) commande au dispositif de nettoyage (12) de terminer la séquence d'opérations de nettoyage interrompue.

2. Dispositif électronique selon la revendication 1, dans lequel la séquence d'opérations de nettoyage comprend la réalisation de l'opération de nettoyage automatique sur le filtre à air (11) lorsque le dispositif électronique redémarre l'opération.

3. Dispositif électronique selon la revendication 1, dans lequel la séquence d'opérations de nettoyage comprend :
la réalisation d'une opération de nettoyage automatique sur le filtre à air (11) lorsque le dispositif électronique redémarre l'opération ; et
la réalisation d'une opération de nettoyage automatique sur le filtre à air (11) lorsqu'un encrassement du filtre à air (11) est détecté lors du fonctionnement normal du dispositif électronique après que l'opération de nettoyage automatique se termine.

4. Dispositif électronique selon la revendication 1, dans lequel la séquence d'opérations de nettoyage comprend :
La définition d'un indicateur d'encrassement à une première valeur, qui indique que l'encrassement du filtre à air (11) a été détecté, lorsque l'encrassement du filtre à air (11) est détecté ;
La définition de l'indicateur d'encrassement à une seconde valeur, qui indique que l'encrassement du filtre à air (11) n'a pas été détecté, lorsqu'une opération de nettoyage automatique réalisée sur le filtre à air (11) se termine ;
la réalisation de l'opération de nettoyage automatique sur le filtre à air (11) si l'indicateur d'encrassement est défini à la première valeur lorsque le dispositif électronique redémarre l'opération ; et
la réalisation de l'opération de nettoyage automatique sur le filtre à air (11) si l'encrassement du filtre à air (11) est détecté et si l'indicateur d'encrassement est défini à la première valeur lors du fonctionnement normal du dispositif électronique.

5. Dispositif électronique selon la revendication 1, comprenant en outre une mémoire non volatile (30) connectée à l'unité de commande (31), dans lequel la séquence d'opérations de nettoyage comprend :
la mesure d'un temps d'utilisation accumulé du filtre à air (11) et le stockage d'une valeur de mesure du temps d'utilisation accumulé dans la mémoire non volatile (30) ;
la réalisation d'une opération de nettoyage automatique sur le filtre à air (11) lorsque la valeur de mesure du temps d'utilisation accumulé devient supérieure ou égale à une valeur indiquant un temps défini, qui est défini par la prédiction de l'encrassement du filtre à air (11) ; et
la redéfinition de la valeur de mesure d'un temps d'utilisation accumulé à une valeur initiale lorsque l'opération de nettoyage automatique se termine et la mesure du temps d'utilisation accumulé à partir d'une valeur initiale.

6. Dispositif électronique selon la revendication 1, comprenant en outre une mémoire non volatile (30) connectée à l'unité de commande (31), la mémoire non volatile (30) stockant un indicateur d'encrassement indiquant un état d'encrassement du filtre à air (11) et la séquence d'opérations de nettoyage comprenant :
le stockage, dans la mémoire non volatile (30), de l'indicateur d'encrassement défini à une première valeur, qui indique que l'encrassement du filtre à air (11) a été détecté, lorsque l'encrassement du filtre à air (11) est détecté lors du fonctionnement du dispositif électronique ;
la réalisation d'une opération de nettoyage automatique sur le filtre à air (11) uniquement si l'indicateur d'encrassement est défini à la première valeur lorsque le dispositif électronique redémarre l'opération ; et
le stockage, dans la mémoire non volatile (30), de l'indicateur d'encrassement défini à une seconde valeur, qui indique que l'encrassement du filtre à air (11) n'a pas été détecté, lorsque l'opération de nettoyage automatique se termine.

7. Dispositif électronique selon la revendication 1, comprenant en outre une mémoire non volatile (30) connectée à l'unité de commande (31), dans lequel la séquence d'opérations de nettoyage comprend :
la mesure d'un temps d'utilisation accumulé du filtre à air (11) et le stockage d'une valeur de mesure du temps d'utilisation accumulé dans la mémoire non volatile (30) ;
la réalisation d'une opération de nettoyage automatique sur le filtre à air (11) uniquement si la valeur de mesure du temps d'utilisation accumulé est supérieure ou égale à une valeur indiquant un temps prédéterminé lorsque le dispositif électronique redémarre l'opération ; et
la redéfinition de la valeur de mesure du temps d'utilisation accumulé à une valeur initiale lorsque l'opération de nettoyage automatique se termine et la mesure du temps d'utilisation accumulé à partir de la valeur initiale.

8. Dispositif électronique selon la revendication 1, comprenant en outre un détecteur d'encrassement (29) connecté à l'unité de commande (31), dans lequel
le détecteur d'encrassement (29) détecte l'encrassement du filtre à air (11) et
l'unité de commande (31) exécute la séquence d'opérations de nettoyage lorsque le détecteur d'encrassement (29) détecte l'encrassement du filtre à air (11).

9. Dispositif électronique selon la revendication 8, dans lequel le détecteur d'encrassement (29) comprend un capteur de débit placé au niveau d'un côté aval du filtre à air (11) et le détecteur d'encrassement (29) génère un signal de détection indiquant un état d'encrassement du filtre à air (11) sur la base d'une sortie du capteur de débit.
